# EUROPEAN PATENT APPLICATION

(11) **EP 4 596 740 A1**
(43) Date of publication of application: **06.08.2025**
(21) Application number: 23897732.6
(22) Date of filing: 27.11.2023
(51) Int. Cl.: C22C 38/00, C21C 7/04, C21D 8/02, C22C 38/12, C22C 38/58

(54) **STEEL SHEET, METHOD FOR PRODUCING SAME, AND STEEL PIPE**

(30) Priority: 29.11.2022 JP 2022190780
(71) Applicant: JFE Steel Corporation, Tokyo 100-0011 (JP)
(72) Inventor: NISHINAKA, Kazuki, Tokyo 100-0011 (JP); IZUMI, Daichi, Tokyo 100-0011 (JP); KITSUYA, Shigeki, Tokyo 100-0011 (JP); SHIMAMURA, Junji, Tokyo 100-0011 (JP); ARAMAKI, Norichika, Tokyo 100-0011 (JP)
(74) Representative: Hoffmann Eitle
(86) International application number: PCT/JP2023/042388
(87) International publication number: WO 2024/117084

(57) **Abstract**

Provided is a steel plate that has excellent HIC resistance. The steel plate has a defined chemical composition, and in a pair of regions from both surfaces of the steel plate to a depth of 1/4 thickness in the thickness direction, inclusions are present that have an average composition of 10 mass% to 40 mass% MgO and an average aspect ratio of 1.5 or less, and an average value of the top 10 % of the circle equivalent diameters of the inclusions is 2.0 µm or less. A crack area ratio CAR after an HIC test in the pair of regions is 1.0 % or less.

## Description

### TECHNICAL FIELD

The present disclosure relates to a steel plate suitable for use in line pipes used to transport crude oil or natural gas, the steel plate having excellent hydrogen-induced cracking resistance to hydrogen induced cracking (HIC), and a method of producing the same. The present disclosure also relates to a steel pipe or tube made from (made using) the steel plate.

### BACKGROUND

Typically, a line pipe is produced by forming a steel plate produced by a plate mill or hot rolling mill into a steel pipe or tube by UOE forming, press bend forming, roll forming, or the like.

In addition to strength, toughness, weldability, and the like, a line pipe used for transporting crude oil or natural gas containing hydrogen sulfide requires so-called sour resistance, such as HIC resistance and sulfide stress corrosion cracking (SSCC) resistance. Of these, HIC occurs when hydrogen ions produced by a corrosion reaction are adsorbed on the steel surface and then enter the steel as atomic hydrogen, which diffuses and accumulates around nonmetallic inclusions such as MnS or hard dual phase structures in the steel to form molecular hydrogen, which causes cracking due to resulting internal pressure.

An example of a nonmetallic inclusion in steel, which is a likely initiation point for HIC, is MnS (manganese sulfide) elongated by hot rolling. To address this, a technique is known in which calcium (Ca) is added to molten steel to cause Ca to react with sulfur (S) in the steel to form CaS (calcium sulfide), a more stable sulfide than MnS, thereby suppressing MnS formation and improving HIC resistance. The added Ca also reacts with oxygen (O) in the steel and with Al₂O₃ (aluminum oxide), a deoxidation product, to form CaO-Al₂O₃ nonmetallic inclusions.

Therefore, when there is not enough Ca in the molten steel, there is not enough Ca to react with the S in the steel, resulting in the formation of a lot of MnS, which degrades HIC resistance in a central segregation area. Further, when Ca is excessive, CaO-Al₂O₃ nonmetallic inclusion clusters with high CaO concentration are formed, and the HIC resistance in the surface layer of the steel plate degrades.

Here, in recent years, development of steel plates at a lower cost has been promoted by increasing the manganese (Mn) content and decreasing the content of other alloy components. In such a steel plate, MnS, which degrades HIC resistance, is formed in the central segregation area from concentrated Mn and concentrated S. Therefore, even when the overall S content of the steel plate is decreased, the frequency of MnS formation in the central segregation area increases.

As a countermeasure, when operations are carried out to further increase Ca addition to suppress MnS formation, then CaO-Al₂O₃ nonmetallic inclusion clusters with high CaO concentration, as described above, are likely to be formed. These inclusion clusters are then trapped in the surface layer of cast steel during continuous casting and become the initiation points of HIC in the surface layer of the steel plate, causing HIC resistance to degrade.

Therefore, to improve the HIC resistance of steel plates with high Mn content, it is necessary to suppress the formation of MnS as well as inclusion clusters by a method other than increasing the amount of Ca added.

A possible solution to the above problem is to use an element that has a strong affinity for S and a high sulfide-forming capacity in combination with Ca. For example, magnesium (Mg) is known as an element that, like Ca, can form sulfides that are more stable than MnS. Comparing the stability of sulfides thermodynamically, CaS > MgS > MnS, in this order, and therefore Mg is expected to be as effective as Ca in inhibiting the formation of MnS.

Here, Patent Literature (PTL) 1 and PTL 2 describe sour resistant steel material that contains not only Ca but also Mg. PTL 3 describes a sour resistant steel material containing Mg as an effective element for improving HIC resistance.

As a method of adding Mg to molten steel, PTL 4 describes a method of supplying MgO into nonmetallic inclusions and controlling the composition of nonmetallic inclusions by adding 2 mass% to 10 mass% MgO to slag.

As other Mg addition methods, PTL 5 describes a method of component adjustment in a refining vessel using a MgO-containing refractory as part or all of a lining refractory, and PTL 6 describes a method of adding Ti-Mg alloy.

As a method of adding Ca and Mg, PTL 7 describes a method of spraying inert gas and additives such as Ca-Si and Mg-Si into the molten steel flow injected from the molten steel pot into the tundish in a continuous casting line.

Regarding the shape of inclusions, it is known that the larger the aspect ratio (major axis length/minor axis length) of an inclusion, the greater the stress concentration due to the inclusion, and it is further known that inclusions are deformed by rolling the slab after casting. That is, as the aspect ratio of inclusions increases during rolling, the stress concentration caused by the inclusions increases and HIC is more likely to occur, making it difficult to produce steel plates having excellent HIC resistance using a conventional rolling method.

### CITATION LIST

### Patent Literature

PTL 1: JP 2017-172010 A
PTL 2: JP 2017-110249 A
PTL 3: JP 2014-208891 A
PTL 4: JP 2012-188696 A
PTL 5: JP 2004-043838 A
PTL 6: JP 2002-266019 A
PTL 7: JP 2017-087229 A

### SUMMARY

### (Technical Problem)

However, in PTL 1 and PTL 2, it is stated that Mg exists as a fine Mg oxide, and that this fine Mg oxide functions as a precipitation nucleus for TiN, which is effective in improving the toughness of the heat-affected zone (HAZ) of a weld. That is, according to the techniques described in PTL 1 and PTL 2, Mg cannot contribute to the formation of MgS because the surface of the Mg oxide is covered by precipitated TiN.

In the method described in PTL 4, MgO nonmetallic inclusions produced by the reduction of slag entrained in molten steel are coarse, and conversely, there is concern that they may become the initiation points of HIC.

The techniques described in PTL 5 and PTL 6 are not economical considering the cost of repairing refractory materials and the cost of alloy containing expensive Ti (titanium).

The method described in PTL 7 has a problem that the inert gas blown in may be entrained in the molten steel flow, resulting in degradation of the quality of cast steel, and it is difficult to achieve both morphological control of nonmetallic inclusions and suppression of bubble defects due to the addition of alloys.

Thus, although the conventional techniques described above are proposals for sour-resistant steel material containing Ca and Mg, they all have problems as described above. In addition, steel plates containing Ca and Mg have the following problems.

That is, there were the following problems with Ca and Mg addition operations, which are not described in any way in PTL 1 to PTL 3 or PTL 7. Ca oxides and sulfides are more thermodynamically stable than Mg oxides and sulfides. Therefore, when Ca-containing nonmetallic inclusions (oxides and sulfides) are already formed in molten steel, the effect of later addition of Mg on the morphology of the nonmetallic inclusions is small.

Ca oxides and sulfides are more stable than Mg oxides and sulfides, and therefore S and O (oxygen) in molten steel are more likely to react with Ca, while reactions between Mg and S and O (oxygen) in molten steel are less likely to occur. Therefore, desulfurization through the formation of MgS and deoxidation through the formation of MgO associated with the addition of Mg, as well as morphological control of nonmetallic inclusions, cannot be expected.

Further, the CaO formed in the steel cannot be effectively reduced by Mg, and therefore the ratio of Ca that contributes to desulfurization cannot be increased. Therefore, it is difficult to decrease the amount of Ca addition to suppress the formation of MnS, and inclusion clusters are trapped in the surface layer of cast steel, which does not sufficiently ensure HIC resistance of the surface layer of the steel plate.

In view of the problems described above, it would be helpful to provide a steel plate that has excellent HIC resistance together with an advantageous method of producing same. Further, it would be helpful to provide a steel pipe or tube made from the steel plate that has excellent HIC resistance described above.

### (Solution to Problem)

The inventors repeated numerous experiments and studies on the chemical composition and production conditions of steel plates in order to improve HIC resistance, and achieved the following discoveries.

That is, with respect to the process of adding a Mg-containing substance and a Ca-containing substance to molten steel, the temperature of the molten steel and the feed rate of Mg and Ca are appropriately controlled, and the addition of the Ca-containing substance is started after the addition of the Mg-containing substance, or the addition of the Mg-containing substance and the Ca-containing substance is started simultaneously. This allows for an appropriate presence of dissolved Mg as well as dissolved Ca in the molten steel. As a result, the activity of oxygen and sulfur in the molten steel decreases due to the influence of dissolved Mg present in the molten steel, and the equilibrium of nonmetallic inclusion reactions moves in the direction of CaS formation. Thus, the enhancement of desulfurization is effectively achieved by promoting CaS formation. Further, as a result of the order of addition described above, the reaction of Mg with S in the molten steel and the reaction of Mg with O (oxygen) in the molten steel proceed, and MnS formation can be suppressed without forming coarse inclusion clusters. Here, "dissolved Ca" and "dissolved Mg" are Ca and Mg dissolved in molten steel in atomic form, respectively.

In addition to the optimization of the addition process described above, the time from the end of addition of the Ca-containing substance to the start of casting, and the average flow rate of molten steel in the mold during casting are optimized as casting conditions. This results in a pair of regions from both surfaces of the steel plate to a depth of 1/4 thickness in the thickness direction (hereinafter also referred to as the "surface layer region") where inclusions are present that have an average composition of 10 mass% to 40 mass% MgO, and an average aspect ratio of 1.5 or less. An average value of the top 10 % of the circle equivalent diameters of these inclusions can then be 2.0 µm or less. As a result, steel plates that have excellent HIC resistance can be obtained, with a crack area ratio (CAR) of 1.0 % or less after HIC testing in the surface layer region.

The present disclosure was completed based on these discoveries, and primary features of the present disclosure are described below.
[1] A steel plate that has a chemical composition containing (consisting of), in mass%, C: 0.030 % to 0.080 %, Si: 0.01 % to 0.50 %, Mn: 0.80 % to 1.80 %, P: 0.010 % or less, S: 0.0010 % or less, Al: 0.030 % to 0.080 %, Nb: 0.080 % or less, N: 0.0080 % or less, Ca: 0.0005 % to 0.0050 %, and Mg: 0.0005 % to 0.0050 %, with the balance being Fe and inevitable impurity, wherein,
   in a pair of regions extending from both surfaces of the steel plate to a depth of 1/4 thickness in the thickness direction, inclusions are present that have an average composition of 10 mass% to 40 mass% MgO and an average aspect ratio of 1.5 or less,
   an average value of the top 10 % of the circle equivalent diameters of the inclusions is 2.0 µm or less, and
   a crack area ratio CAR after an HIC test in the region is 1.0 % or less,
[2] The steel plate according to [1], wherein the chemical composition further contains, in mass%, at least one selected from the group consisting of Cu: 0.30 % or less, Ni: 0.30 % or less, Cr: 0.50 % or less, Mo: 0.50 % or less, V: 0.100 % or less, Ti: 0.100 % or less, Zr: 0.0200 % or less, and REM: 0.0200 % or less.
[3] A method of producing a steel plate, the method comprising:
   an addition process of adding a Mg-containing substance and a Ca-containing substance to molten steel after refining is completed, under the following conditions:
      (A) a temperature of the molten steel at the start of the addition process is in a range from 1580 °C to 1620 °C,
      (B) the adding of the Ca-containing substance is started after the adding of the Mg-containing substance is started, or the adding of the Mg-containing substance and the Ca-containing substance is started simultaneously, and
      (C) Mg and Ca feed rates are each 15 kg/min to 30 kg/min;
   casting the molten steel to obtain a slab under the following conditions: (i) the time from the end of the adding of the Ca-containing substance to the start of casting is 70 min or less, and (ii) an average flow rate of the molten steel in the mold during casting is 0.10 m/s or more; and
   hot rolling the slab to produce the steel plate according to [1] or [2].
[4] The method of producing a steel plate according to [3], wherein
   the hot rolling is carried out under the conditions that a heating temperature of the slab is 1000 °C to 1250 °C and a cross-rolling ratio is 10 or less, and
   subsequently, controlled cooling of the steel plate is carried out under the condition that a surface temperature of the steel plate at the start of cooling is the Ar₃ temperature or more, where the Ar₃ temperature is calculated by the following Expression (1), Ar3 temperature, in °C = 910 - 310[C] - 80[Mn] - 20[Cu] - 15[Cr] - 55[Ni] - 80[Mo] ...(1)
   where [X] means the content of element X in the steel, in mass%.
[5] A steel pipe or tube made from the steel plate according to [1] or [2].

### (Advantageous Effect)

The steel plate and the steel pipe or tube according to the present disclosure have excellent HIC resistance. Further, the method of producing a steel plate according to the present disclosure can produce a steel plate that has excellent HIC resistance.

### DETAILED DESCRIPTION

### (Steel plate)

The steel plate according to an embodiment of the present disclosure has a defined chemical composition, has defined inclusions in a pair of first regions from each surface of the steel plate to a depth of 1/4 thickness in the thickness direction (surface layer region), and has excellent HIC resistance in the surface layer region. Hereinafter, the position at a depth of 1/4 thickness in the thickness direction from each of the two surfaces of the steel plate is also simply referred to as the "1/4 plate thickness position".

### [Chemical composition]

First, the chemical composition of the steel plate and the reasons for such limitation are described. In the following description, units indicated as "%" means "mass%" unless otherwise specified.

### C: 0.030 % to 0.080 %

C effectively contributes to improving the strength of the steel plate, but when C content is less than 0.030 %, sufficient strength cannot be secured, and therefore the C content is 0.030 % or more. The C content is preferably 0.035 % or more. On the other hand, when the C content exceeds 0.080 %, the hardness of the surface layer and the central segregation area increases during accelerated cooling, which degrades HIC resistance. The C content is therefore 0.080 % or less. The C content is preferably 0.070 % or less.

### Si: 0.01 % to 0.50 %

Si is added for deoxidation, but the deoxidizing effect is not sufficient when Si content is less than 0.01 %, and therefore the Si content is 0.01 % or more. The Si content is preferably 0.05 % or more. On the other hand, when the Si content exceeds 0.50 %, low-temperature toughness degrades and surface characteristics degrade. The Si content is therefore 0.50 % or less. The Si content is preferably 0.45 % or less.

### Mn: 0.80 % to 1.80 %

Mn suppresses the formation of ferrite during cooling, but the effect is not fully realized when Mn content is less than 0.80 %. The Mn content is therefore 0.80 % or more. The Mn content is preferably 1.00 % or more. On the other hand, when the Mn content exceeds 1.80 %, central segregation is promoted and HIC resistance degrades. The Mn content is therefore 1.80 % or less. The Mn content is preferably 1.70 % or less.

### P: 0.010 % or less

P is an inevitable impurity element and degrades HIC resistance by increasing the hardness of the surface layer and central segregation area. When P content exceeds 0.010 %, these negative effects become pronounced, and therefore the P content is 0.010 % or less. The P content is preferably 0.008 % or less. The lower the P content, the better, but from a refining cost perspective, the P content is preferably 0.001 % or more.

### S: 0.0010 % or less

S is an inevitable impurity element and degrades HIC resistance by forming MnS inclusions in steel. S content is therefore 0.0010 % or less. The S content is preferably 0.0008 % or less. The lower the S content, the better, but from a refining cost perspective, the S content is preferably 0.0002 % or more.

### Al: 0.030 % to 0.080 %

Al is added as a deoxidizer, but the effect is not fully realized when the Al content is less than 0.030 %. The Al content is therefore 0.030 % or more. The Al content is preferably 0.035 % or more. On the other hand, when the Al content exceeds 0.080 %, problems such as alumina clogging of the soaking nozzle during continuous casting occur, and therefore the Al content is 0.080 % or less. The Al content is preferably 0.070 % or less.

### Nb: 0.080 % or less

Nb, when present as solute Nb, enlarges the non-recrystallization temperature range during controlled rolling and contributes to improved low-temperature toughness. From the viewpoint of sufficiently obtaining this effect, Nb content is preferably 0.005 % or more. The Nb content is more preferably 0.010 % or more. On the other hand, when the Nb content exceeds 0.080 %, coarse carbides are crystallized during solidification, which degrades HIC resistance. The Nb content is therefore 0.080 % or less. The Nb content is preferably 0.060 % or less.

### N: 0.0080 % or less

N has a microstructure refinement effect through the formation of nitrides. From the viewpoint of sufficiently obtaining this effect, N content is preferably 0.0010 % or more. The N content is more preferably 0.0015 % or more. On the other hand, when the N content exceeds 0.0080 %, HIC resistance and low-temperature toughness degrade due to the formation of coarse nitrides. The N content is therefore 0.0080 % or less. The N content is preferably 0.0070 % or less.

### Ca: 0.0005 % to 0.0050 %

Ca is an effective element for improving HIC resistance by morphological control of sulfide inclusions, but the effect of addition is not sufficient when Ca content is less than 0.0005 %. The Ca content is therefore 0.0005 % or more. The Ca content is preferably 0.0008 % or more. On the other hand, when the Ca content exceeds 0.0050 %, not only do the effects described above become saturated, but HIC resistance of the steel degrades due to a decrease in cleanliness. The Ca content is therefore 0.0050 % or less. The Ca content is preferably 0.0045 % or less.

### Mg: 0.0005 % to 0.0050 %

Mg is a deoxidation and desulfurization element, and has an effect of increasing the efficiency of CaS formation through interaction and improving the desulfurization action of nonmetallic inclusions. Further, Mg is an element that refines inclusions, and is therefore effective in suppressing the formation of inclusion clusters in the surface layer of the steel plate, which is effective in improving HIC resistance. For these effects to be stable, Mg content is 0.0005 % or more. On the other hand, as the Mg content increases, the effect of Mg becomes saturated, and therefore the Mg content is 0.0050 % or less.

The basic components in the chemical composition of the steel plate according to the present embodiment have been described above. In order to further improve the strength and toughness of the steel plate, at least one selected from the group consisting of Cu, Ni, Cr, and Mo can be optionally contained in the chemical composition in the following ranges.

### Cu: 0.30 % or less

Cu is an effective element for improving low-temperature toughness and increasing strength, and to obtain these effects, Cu content is preferably 0.01 % or more. On the other hand, Cu concentrates in the central segregation area, and therefore HIC resistance degrades when the Cu content exceeds 0.30 %. Therefore, when Cu is included, the Cu content is 0.30 % or less. The Cu content is preferably 0.25 % or less.

### Ni: 0.30 % or less

Ni is an effective element for improving low-temperature toughness and increasing strength, and to obtain these effects, Ni content is preferably 0.01 % or more. On the other hand, Ni concentrates in the central segregation area, and therefore HIC resistance degrades when the Ni content exceeds 0.30 %. Therefore, when Ni is included, the Ni content is 0.30 % or less. The Ni content is preferably 0.25 % or less.

### Cr: 0.50 % or less

Cr, like Mn, is an effective element for obtaining sufficient strength even with low C content, and to obtain this effect, the Cr content is preferably 0.01 % or more. On the other hand, too much Cr content promotes central segregation and degrades HIC resistance. Therefore, when Cr is included, the Cr content is 0.50 % or less. The Cr content is preferably 0.45 % or less.

### Mo: 0.50 % or less

Mo is an effective element for improving low-temperature toughness and increasing strength, and to obtain these effects, Mo content is preferably 0.01 % or more. The Mo content is more preferably 0.10 % or more. On the other hand, too much Mo content degrades weldability. Therefore, when Mo is included, the Mo content is 0.50 % or less. The Mo content is preferably 0.40 % or less.

The chemical composition of the steel plate according to the present embodiment may contain at least one element selected from the group consisting of V, Ti, Zr, and REM, within the following ranges.

### V: 0.100 % or less, Ti: 0.100 % or less

Both V and Ti are elements that can be optionally included to increase the strength and low-temperature toughness of the steel plate. To obtain these effects, the content of each element is preferably 0.005 % or more. On the other hand, when the content of each element exceeds 0.100 %, the toughness of a welded portion degrades. Therefore, when either or both of these elements are included, the content of each element is 0.100 % or less.

### Zr: 0.0200 % or less, REM: 0.0200 % or less

Zr and REM are elements that can be optionally included to enhance low-temperature toughness through crystal grain refinement and to enhance crack resistance through control of inclusion properties. To obtain these effects, the content of each element is preferably 0.0005 % or more. On the other hand, when the content of any of these elements exceeds 0.0200 %, the effects are saturated, and therefore, when any of these elements are included, the content of each element is 0.0200 % or less.

Cu, Ni, Cr, Mo, V, Ti, Zr, and REM are optional elements, and therefore the content of each element may of course be 0 % or more than 0 %.

The balance, other than the elements described above, consists of Fe and inevitable impurity. For example, O (oxygen) is an inevitable impurity element, but as long as the O content is 0.0030 % or less, this is allowable according to the present embodiment. Furthermore, other trace elements may be included as long as they do not impair the effects according to the present disclosure. According to the present embodiment, B (boron) content of 0.0010 % or less is allowable. The B content is preferably 0.0005 % or less.

### [Inclusions]

In the steel plate according to the present embodiment, it is important that, in a pair of regions from both surfaces of the steel plate to a depth of 1/4 thickness in the thickness direction (surface layer region), inclusions are present that have an average composition of 10 mass% to 40 mass% MgO and an average aspect ratio of 1.5 or less, and an average value of the top 10 % of the circle equivalent diameter of the inclusions is 2.0 µm or less.

### [MgO: 10 mass% to 40 mass%]

In the average composition of inclusions in the surface layer region, the MgO content is 10 mass% or more. When the MgO content is less than 10 mass%, formation of inclusion clusters cannot be suppressed and HIC resistance degrades. In the average composition of inclusions in the surface layer region, the MgO content is 40 mass% or less. When the MgO content exceeds 40 mass%, the effect of suppressing formation of inclusion clusters decreases and HIC resistance degrades.

The content of MgO in the average composition of inclusions in the surface layer region (mass%) is determined by the following method. A cross-section perpendicular to the rolling direction of the steel plate is used as the observation plane. A rectangular evaluation region is set on one side of the steel plate: vertically from the surface of the one side to a 1/4 depth position and horizontally 10 mm in the width direction. Another rectangular evaluation region is set on the other side of the steel plate: vertically from the surface of the other side to a 1/4 depth position and horizontally 10 mm in the width direction. Inclusions in these two evaluation regions are observed with a scanning electron microscope (SEM) that has particle analysis capability. For each of all inclusions within the two evaluation regions, the amount of Mg (mass%), Al (mass%), S (mass%), Ca (mass%), and Mn (mass%) are measured, and MgO (mass%) is determined using the following Expression (2). MgO (mass%) = (MgO [g] × 100) / (MgO [g] + Al2O3 [g] + CaO [g] + CaS [g] + MnS [g]) ...(2)

In Expression (2), MgO [g], Al₂O₃ [g], CaO [g], CaS [g], and MnS [g] respectively represent the content of MgO, Al₂O₃, CaO, CaS, and MnS in the inclusions calculated from the amount of Mg (mass%), Al (mass%), S (mass%), Ca (mass%), and Mn (mass%) contained in the inclusions. It is assumed that all Mg and Al form MgO and Al₂O₃ inclusions, respectively, all Ca forms CaO-CaS inclusions, and all Mn forms MnS.

Inclusions that do not contain any MgO, Al₂O₃, CaO, CaS, or MnS, such as carbon particles from polishing debris, are excluded from the measurement. Further, inclusions having a circle equivalent diameter of less than 0.4 µm are also excluded from the measurement because they do not affect the effects according to the present disclosure.

The average value obtained by dividing the sum of the MgO (mass%) of all inclusions measured by the number of inclusions measured is the MgO content (mass%) in the average composition.

The number density of inclusions in the surface layer region is preferably 1.0/mm² or more. The number density of inclusions in the surface layer region is preferably 50.0/mm² or less. This is because the desired HIC resistance can be obtained in this range. The number density of inclusions in the surface layer region is determined by the following method. A cross-section perpendicular to the rolling direction of the steel plate is used as the observation plane. A rectangular evaluation region is set on one side of the steel plate: vertically from the surface of the one side to a 1/4 depth position and horizontally 10 mm in the width direction. Another rectangular evaluation region is set on the other side of the steel plate: vertically from the surface of the other side to a 1/4 depth position and horizontally 10 mm in the width direction. Inclusions in these two evaluation regions are observed with a scanning electron microscope (SEM) that has particle analysis capability. The number of inclusions having a circle equivalent diameter of 0.4 µm or greater in the two evaluation regions is counted, and the number is divided by the total area of the two evaluation regions, which is then used as the "number density of inclusions in the surface layer region".

### [Average aspect ratio of inclusions: 1.5 or less]

According to the present embodiment, the average aspect ratio of inclusions in the surface layer region is 1.5 or less. When the average aspect ratio exceeds 1.5, the stress concentration caused by the inclusions increases and HIC resistance degrades. A lower limit of the average aspect ratio is not particularly limited. Rolling increases the aspect ratio of the inclusions, and therefore the average aspect ratio may be 1.1 or more.

The average aspect ratio of inclusions in the surface layer region is determined by the following method. A cross-section perpendicular to the rolling direction of the steel plate is used as the observation plane. A rectangular evaluation region is set on one side of the steel plate: vertically from the surface of the one side to a 1/4 depth position and horizontally 10 mm in the width direction. Another rectangular evaluation region is set on the other side of the steel plate: vertically from the surface of the other side to a 1/4 depth position and horizontally 10 mm in the width direction. Inclusions in these two evaluation regions are observed with a scanning electron microscope (SEM) that has particle analysis capability. The aspect ratio (major axis length/minor axis length) is determined for inclusions that have a circle equivalent diameter of 0.4 µm or more in the two evaluation regions, and the average value is adopted as the "average aspect ratio of inclusions in the surface layer region". The major axis length means the maximum Feret diameter, and the minor axis length means the minimum Feret diameter.

### [Average value of top 10 % of circle equivalent diameters of inclusions: 2.0 µm or less]

According to the present embodiment, it is important that the average value of the top 10 % of the circle equivalent diameters of inclusions in the surface layer region is 2.0 µm or less. Here, "top 10 %" means 10 % in terms of the number distribution of inclusion circle equivalent diameters, starting from the inclusion having the largest circle equivalent diameter. When the average value of the circle equivalent diameters of 10 % of such inclusions is specified, coarse inclusions that could be an initiation point of HIC can be evaluated among the inclusions within the measurement range, and this can be used as an indicator for HIC resistance improvement. According to the present embodiment, when the average value of the top 10 % of the circle equivalent diameters of inclusions in the surface layer region exceeds 2.0 µm, HIC resistance in the surface layer region degrades, and the crack area ratio CAR after the HIC test in the surface layer region exceeds 1.0 %. According to the present embodiment, a lower limit of the average value of the top 10 % of the circle equivalent diameters of inclusions in the surface layer region is not particularly limited. In order to suppress an increase in steelmaking costs, the average value of the top 10 % of the circle equivalent diameters of inclusions is preferably 0.4 µm or more.

The average value of the top 10 % of the circle equivalent diameters of inclusions in the surface layer region is determined by the following method. A cross-section perpendicular to the rolling direction of the steel plate is used as the observation plane. A rectangular evaluation region is set on one side of the steel plate: vertically from the surface of the one side to a 1/4 depth position and horizontally 10 mm in the width direction. Another rectangular evaluation region is set on the other side of the steel plate: vertically from the surface of the other side to a 1/4 depth position and horizontally 10 mm in the width direction. Inclusions in these two evaluation regions are observed with a scanning electron microscope (SEM) that has particle analysis capability. The circle equivalent diameters of inclusions having circle equivalent diameters of 0.4 µm or more in the two evaluation regions are measured, and the average value of the top 10 % of the circle equivalent diameters of these inclusions in terms of circle equivalent diameter is obtained, which is adopted as the "average value of the top 10 % of circle equivalent diameters of inclusions in the surface layer region".

### [HIC resistance]

According to the present embodiment, the crack area ratio CAR after the HIC test in the surface layer region is 1.0 % or less. This allows for excellent HIC resistance to be achieved. According to the present embodiment, the crack area ratio CAR after the HIC test in the surface layer region may be 0.0 % or more.

The crack area ratio CAR after the HIC test in the surface layer region is determined by the following method. A sample of full thickness × 20 mm width × 100 mm length is taken from the center position of the steel plate in the rolling direction and width direction. Using NACE standard TM0177 Solution A, the HIC test is carried out by immersing the sample in a solution for 96 h at a hydrogen sulfide partial pressure of 1 bar. Crack area ratio (CAR) is measured after the HIC test in the surface layer region of the steel plate. Specifically, an ultrasonic inspection device and a water immersion probe (frequency: 10 MHz, diameter: 0.375 inches, depth of focus: 3 inches) are used to conduct ultrasonic testing on a pair of regions from each of the two surfaces of the steel plate to a depth of 1/4 of the plate thickness in the thickness direction at a pitch of 0.1 mm. The amplification is determined so that the bottom wave echo is 100 %, and the crack area ratio (CAR) is the area ratio of the portion of the surface layer of the steel plate where the defect echo height is 25 % or more.

### [Thickness]

The steel plate according to the present embodiment is not particularly limited in thickness. The steel plate according to the present embodiment preferably has a thickness from 12 mm to 39 mm.

### (Method of producing steel plate)

The following is a description of a method of producing a steel plate according to an embodiment of the present disclosure to produce the steel plate according to the present embodiment.

The method of producing a steel plate according to an embodiment of the present disclosure includes: an addition process of adding a Mg-containing substance and a Ca-containing substance to molten steel after refining is completed; followed by a process of casting the molten steel to obtain a slab; followed by a process of hot rolling the slab to obtain a steel plate; followed by a process of controlled cooling of the steel plate.

The molten steel refining process can be carried out by a conventional known method. For example, after hot metal pretreatment, primary refining by converter, followed by secondary refining where molten steel is discharged from the converter to a ladle, desulfurization treatment in the ladle refining furnace, and then vacuum degassing treatment in an RH vacuum degasser, can be used to improve the cleanliness of the molten steel in the ladle. In the method of producing a sour-resistant steel plate, a ladle refining furnace is used for desulfurization treatment to decrease the S content in the molten steel to 0.0010 % or less. Further, an RH vacuum degasser is used to remove hydrogen (H) from the molten steel and to separate and remove oxide-based nonmetallic inclusions such as Al₂O₃ from the molten steel.

### [Addition process of adding Mg-containing substance and Ca-containing substance]

The time of adding the Mg-containing substance and the Ca-containing substance to the molten steel in the ladle is from the end of the refining process described above until the start of casting. This is to prevent Mg and Ca, which are strong deoxidizers and strong desulfurizing agents, from being consumed by reacting with dissolved oxygen or reducing oxide-based nonmetallic inclusions, and to allow Mg and Ca to contribute to the morphological control of nonmetallic inclusions.

According to the present embodiment, it is important to carry out the addition process of adding the Mg-containing substance and the Ca-containing substance to the molten steel after refining is completed under the following conditions: (A) a temperature of the molten steel at the start of the addition process is in a range from 1580 °C to 1620 °C, (B) the adding of the Ca-containing substance is started after the adding of the Mg-containing substance is started, or the adding of the Mg-containing substance and the Ca-containing substance is started simultaneously, and (C) Mg and Ca feed rates are each 15 kg/min to 30 kg/min.

Both Mg and Ca are high vapor pressure elements and evaporate at normal molten steel temperatures. Further, Mg and Ca are highly reactive not only with molten steel but also with air. Therefore, to suppress the evaporation of Mg and Ca and to improve the yield rate of Mg and Ca, pure metal Mg and Ca are not added, but a Mg-containing substance and a Ca-containing substance are added. The Mg-containing substance is preferably a Mg alloy in which Mg is alloyed with at least one element selected from silicon, aluminum, and the like. The Ca-containing substance is preferably a Ca alloy in which Ca is alloyed with at least one element selected from silicon, aluminum, and the like. From the viewpoint of handling and reactivity with molten steel, the pure Mg content of the Mg alloy and the pure Ca content of the Ca alloy are each preferably from 5 mass% to 30 mass%. Further, the simultaneous adding of the Mg-containing substance and the Ca-containing substance includes the adding of a substance containing both Mg and Ca.

The Mg-containing substance may be, for example, Mg alloy powder or iron-coated Mg wire made by covering Mg alloy powder with a thin steel sheet. The Ca-containing substance may be, for example, Ca alloy powder or iron-coated Ca wire made by covering Ca alloy powder with a thin steel sheet. Further, when the Mg-containing substance and the Ca-containing substance are added simultaneously, an iron-coated Mg wire and an iron-coated Ca wire may be added individually, but as a substance containing both Mg and Ca, an iron-coated Mg-Ca wire made by coating Mg alloy powder and Ca alloy powder with a thin steel sheet may be added.

The method of adding the Mg-containing substance and the Ca-containing substance may be by adding wire to the molten steel as described above, and may be by blowing Mg alloy powder and Ca alloy powder from an injection lance immersed in the molten steel.

### [Temperature of molten steel at start of addition process: 1580 °C to 1620 °C]

When the molten steel temperature at the start of the addition process is too high, the amount of Mg and Ca evaporating into the atmosphere increases and the yield rate (dissolved amount of Mg and Ca in the molten steel) decreases. On the other hand, when the molten steel temperature at the start of the addition process is too low, the stirring of the molten steel by evaporation is insufficient, and in this case also yield rate decreases. Therefore, to stabilize the yield rate of Mg and Ca, the molten steel temperature at the start of the addition process is in the range from 1580 °C to 1620 °C.

### [Order of addition of Mg-containing substance and Ca-containing substance]

According to the present embodiment, a first case is to start the addition of the Ca-containing substance after starting the addition of the Mg-containing substance, or a second case is to start the addition of the Mg-containing substance and the Ca-containing substance simultaneously. This allows an appropriate amount of dissolved Ca and dissolved Mg to be present in the molten steel. The influence of the appropriate amount of dissolved Mg in the molten steel decreases the activity of oxygen and sulfur in the molten steel, and the equilibrium of nonmetallic inclusion reactions moves in the direction of CaS formation. CaS formation is promoted and improved desulfurization is achieved. Further, reactions between Mg and S in molten steel and between Mg and O (oxygen) in molten steel also proceed. As a result, the average value of the top 10 % of the circle equivalent diameters of inclusions in the surface layer region can be 2.0 µm or less.

In contrast, in the order of addition in which the addition of the Mg-containing substance is started after the addition of the Ca-containing substance, the effects of desulfurization through the formation of MgS and deoxidation through the formation of MgO associated with the addition of the Mg-containing substance, as well as morphological control of nonmetallic inclusions, cannot be achieved. This is because Ca oxides and sulfides are thermodynamically more stable than Mg oxides and sulfides. That is, the average value of the top 10 % of the circle equivalent diameters of inclusions in the surface layer region exceed 2.0 µm.

In the first case where the addition of the Ca-containing substance is started after the addition of the Mg-containing substance is started, there may be a period during which both the Mg-containing substance and the Ca-containing substance are added (that is, an overlapping period between the addition period of the Mg-containing substance and the addition period of the Ca-containing substance), or the addition of the Mg-containing substance may be finished and then the addition of the Ca-containing substance be started. That is, a configuration with no overlapping period is possible. However, when starting the addition of the Ca-containing substance after the addition of the Mg-containing substance has been completed, the shorter the interval, the better, from the viewpoints of productivity and the effects of the present disclosure. The interval is preferably 5 min or less.

Further, in the second case, where the addition of the Mg-containing substance and the Ca-containing substance is started simultaneously, the end of the addition of the Mg-containing substance and the Ca-containing substance is also preferably simultaneous. One easy way to do this is to add iron-coated Mg-Ca wire to the molten steel. However, it is of course possible to use a method of starting the addition of iron-coated Mg wire and iron-coated Ca wire individually and simultaneously, even in the second case. In this case, "simultaneous start of addition" does not mean that the start of addition coincides strictly within seconds, and a delay in the start of addition (for example, within 30 s) that becomes unavoidable in the operation of a feeding machine is of course acceptable.

### [Feed rate of Mg and Ca: each 15 kg/min to 30 kg/min]

When the Mg and Ca feed rates (addition rates of Mg-containing substance and Ca-containing substance) are too fast, the MgO content in the average composition of the inclusions becomes excessive and HIC resistance degrades. On the other hand, when the Mg and Ca feed rates (addition rates of Mg-containing substance and Ca-containing substance) are too slow, the MgO content in the average composition of the inclusions becomes too small, and HIC resistance still degrades. Therefore, according to the present embodiment, the Mg-containing substance and the Ca-containing substance are added so that the feed rates of pure Mg content and pure Ca content are respectively each 15 kg/min to 30 kg/min. The feed rates of pure Mg content and pure Ca content refers to the amounts of Mg and Ca supplied per minute during the period when the Mg-containing substance and the Ca-containing substance are added, respectively.

### [Casting process]

According to the present embodiment, it is important to cast molten steel to obtain a slab, billet, or the like under the following conditions: (i) the time from the end of the adding of the Ca-containing substance to the start of casting is 70 min or less, and (ii) an average flow rate of the molten steel in the mold during casting is 0.10 m/s or more. Other conditions in the casting process may be according to a conventional method. In the casting process, continuous casting can be carried out using a continuous casting line.

### [Time from end of adding of Ca-containing substance to start of casting: 70 min or less]

In the ladle, inclusions float and separate from the molten steel over time. Inclusion floatation separation contributes to the cleanliness of the molten steel, and therefore the time from the end of the adding of the Ca-containing substance to the start of casting has conventionally been 100 min or more. In contrast, according to the present embodiment, the inclusions produced by the addition of the Mg-containing substance and the Ca-containing substance are necessary to improve HIC resistance. Therefore, when inclusions float and separate too much from the molten steel, HIC resistance deteriorates. Therefore, the time from the end of the adding of the Ca-containing substance to the start of casting is 70 min or less. The time is preferably 60 min or less. A lower limit of the time is not particularly limited. Considering cleanliness, the time is preferably 40 min or more. According to the present embodiment, the cleanliness of the molten steel is at a level that is not problematic at the times mentioned above, due to satisfying the amount of Ca added as described above.

### [Average flow rate of molten steel in mold during casting: 0.10 m/s or more]

In the mold, the flow of the molten steel is controlled by electromagnetic stirring, which suppresses agglomeration and coarsening of inclusions at the interface between the solidifying shell and the molten steel. To sufficiently suppress coarsening of inclusions and improve HIC resistance in the surface layer region, the average flow rate of the molten steel in the mold is 0.10 m/s or more. The average flow rate of the molten steel in the mold is preferably 0.20 m/s or more. On the other hand, when the average flow rate of the molten steel in the mold exceeds 0.40 m/s, the effect of suppressing inclusion coarsening is saturated, and therefore the average flow rate of the molten steel in the mold is preferably 0.40 m/s.

The average flow rate of the molten steel in the mold can be calculated by measuring the incline of primary dendrites relative to the direction perpendicular to the cast steel surface (dendrite inclination angle) and using the following Expression (3). The molten steel flow rate is measured at five locations from each surface of the cast steel: 1/6, 1/3, 1/2, 2/3, and 5/6 positions in the width direction (from both surfaces for a total of 10 locations), and the average value is the "average flow rate of the molten steel in the mold". θ = {(0.35 × C02) / (C02 + 0.0005) + 0.65} × 11.5 × VF-0.177 × log{(5.38 × 10-1 × VF2.08) / V} ...(3)

θ (degree) is the dendrite inclination angle, C₀ (mass%) is carbon concentration, V_{F} (m/s) is the molten steel flow rate, and V (m/s) is the solidification rate. The dendrite inclination angle θ is obtained by the following method. That is, a sample having a cross-section perpendicular to the rolling direction is taken from the cast steel after casting, polished, corroded with a saturated picric acid solution, and observed under an optical microscope. In a surface layer portion within a depth of 5 mm from the cast steel surface in the cross-section, the inclination of primary dendrites with respect to the direction perpendicular to the slab surface is measured with a protractor to determine the dendrite inclination angle θ. Carbon concentration C₀ is analyzed by a solid state emission spectroscopy device using samples taken from the tundish before casting. The solidification rate V is determined from the time variation of the solidified shell thickness.

### [Hot rolling process]

The slab is then subjected to hot rolling to obtain a steel plate. The hot rolling is preferably carried out under the conditions that a heating temperature of the slab is from 1000 °C to 1250 °C and a cross-rolling ratio is 10 or less. Other conditions in the hot rolling process may be according to a conventional method.

### [Heating temperature of slab: 1000 °C to 1250 °C]

When the heating temperature of the steel slab during hot rolling is less than 1000 °C, controlled cooling cannot be started at the Ar₃ temperature or more and HIC resistance cannot be obtained. The heating temperature of the slab is therefore 1000 °C or more. The heating temperature of the slab is preferably 1030 °C or more. On the other hand, when the heating temperature of the slab exceeds 1250 °C, energy consumption increases. The heating temperature of the slab is therefore 1250 °C or less. The heating temperature of the slab is preferably 1200 °C or less. The temperature is the furnace temperature of the heating furnace, and the slab is assumed to be heated to this temperature to the center.

### [Cross-rolling ratio: 10 or less]

According to the present embodiment, the cross-rolling ratio defined by the following Expression (4) is preferably 10 or less. The cross-rolling ratio of 10 or less effectively prevents the elongation of inclusions and further improves HIC resistance. A lower limit of the cross-rolling ratio is not particularly limited. From the viewpoint of rolling line constraints, the cross-rolling ratio may be 6 or more. Cross-rolling ratio = rolling ratio in rolling direction / rolling ratio in transverse direction ...(4)

The "rolling ratio in rolling direction" refers to rolling ratio in the rolling direction to total rolling when cross-rolling is performed during hot rolling. The "rolling ratio in transverse direction" refers to rolling ratio in the transverse direction (direction orthogonal to the rolling direction) to total rolling when cross-rolling is performed during hot rolling.

### [Controlled cooling process]

The next step is a controlled cooling process of the steel plate. The process is preferably carried out under the condition that the steel plate surface temperature at the start of cooling is the Ar₃ temperature or more, where the Ar₃ temperature is determined by the following Expression (1). When the steel plate surface temperature at the start of cooling is below the Ar₃ temperature, ferrite may be formed before cooling and HIC resistance may degrade. For this reason, the steel plate surface temperature at the start of cooling is preferably the Ar₃ temperature or more. Here, the Ar₃ temperature refers to the temperature at which ferrite transformation begins during cooling, and can be determined, for example, from the composition of the steel using the following Expression (1). The steel plate surface temperature may be measured with a radiation thermometer or the like. Ar3 temperature, in °C = 910 - 310[C] - 80[Mn] - 20[Cu] - 15[Cr] - 55[Ni] - 80[Mo] ...(1)

Here, **[X]** means the content of element X in the steel (mass%), and 0 may be substituted for the content of elements not included. Other conditions in the controlled cooling process may be according to a conventional method.

### (Steel pipe or tube)

The steel pipe or tube (UOE steel pipe or tube, electric resistance welded steel pipe or tube, spiral steel pipe or tube, or the like) according to an embodiment of the present disclosure may be produced by forming a steel plate into a tube shape by press bend forming, roll forming, UOE forming, or the like, and then welding the butt joint. The steel pipe or tube according to the present embodiment is suitable for transporting crude oil or natural gas.

For example, a UOE steel pipe or tube is produced by groove machining the ends of the steel plate, forming into a steel tube shape by C pressing, U-ing pressing, and O-ing pressing, seam welding the butt joints by internal and external welding, and then undergoing an expanding process as required. Further, any welding method that provides sufficient joint strength and joint toughness is acceptable, but submerged arc welding is preferred in terms of excellent weld quality and production efficiency. Further, pipe or tube expansion can also be carried out on a steel pipe or tube that has been formed by press bend forming a steel plate into a tube shape and then seam welding at the butt joint.

### EXAMPLES

Hot metal was decarburized and refined in a converter to produce molten steel, and the molten steel was discharged into a ladle. After the steel was discharged from the converter, metallic Al was added to the ladle to deoxidize the molten steel.

The molten steel contained in the ladle was then subjected to desulfurization treatment in the ladle refining furnace. In the desulfurization treatment process, CaO-Al₂O₃-SiO₂ flux was used as a desulfurizing agent. The molten steel was heated by arc heat from a graphite electrode and the desulfurizing agent was turned into slag. Argon gas was blown at a rate of 100 Nm³/h to 150 Nm³/h as a stirring gas from an immersion lance immersed in the molten steel, and the molten steel and the desulfurizing agent were stirred and mixed to carry out the desulfurization treatment.

Further, vacuum degassing refining was carried out in an RH vacuum degasser. Specifically, degassing treatment, adjustment of molten steel composition, and floating and separation of nonmetallic inclusions by stirring were carried out. The treatment time for the vacuum degassing refining was 20 min.

Then, during the period from the end of refining in the RH vacuum degasser to the start of continuous casting in the continuous casting line, iron-coated Mg wire as the Mg-containing substance and iron-coated Ca wire as the Ca-containing substance were added to the molten steel in the ladle to obtain steel having the chemical compositions listed in Table 1 (steel samples A to T). Table 2 lists the molten steel temperature at the start of the addition process, the order of the adding of the Mg-containing substance and the Ca-containing substance, and the feed rates of Mg and Ca under each condition. In the "Mg, Ca order of addition" column in Table 2, "Mg→Ca" means that the addition of iron-coated Mg wire was started and immediately after completion, the addition of iron-coated Ca wire was started, "Ca→Mg" means that the addition of iron-coated Ca wire was started and immediately after completion, the addition of iron-coated Mg wire was started, and "Mg, Ca simultaneous" means that iron-coated Mg-Ca wire was added.

The molten steel was then cast by continuous casting to produce a slab. Table 2 lists the time from the end of addition of the Ca-containing substance to the start of casting and the average flow rate of molten steel in the mold during casting under each condition. The average flow rate of molten steel in the mold was determined by the previously described method.

The slab was then heated to the slab heating temperature listed in Table 2, and the slab was hot rolled under the cross-rolling ratio conditions listed in Table 2 to produce a steel plate having a final plate thickness listed in Table 2. At the steel plate surface temperature at the start of cooling listed in Table 2, controlled cooling of the steel plate was carried out.

Ends of the steel plate were then subjected to groove machining and formed into a steel tube shape by C-pressing, U-ing pressing, and O-ing pressing, and the butt joints were seam welded by submerged arc welding from the inside and outside surfaces, and a steel pipe or tube was obtained through an expanding process. The chemical compositions of the steel plates and the steel pipes or tubes produced from the steel samples A to T are the same as the chemical compositions of the steel samples A to T from which they were made, at least within an industrial error range. In Table 1, elements marked by a hyphen (-) are treated as having zero content in the calculation of Ar₃ (°C).

### [Evaluation of inclusions]

Table 2 lists the "MgO content in average composition of inclusions in surface layer region", "number density of inclusions in surface layer region", "average value of top 10 % of circle equivalent diameters of inclusions in surface layer region", and "average aspect ratio of inclusions in surface layer region", each obtained by the previously described methods.

### [Evaluation of HIC resistance]

Table 2 lists the "crack area ratio CAR after HIC test in surface layer region", obtained by the previously described method.

**Table 1**

| Steel sample ID | Chemical composition (mass%) | | | | | | | | | | | | | | | | | | Ar₃ temp. (°C) |
|---|---|---|---|---|---|---|---|---|---|---|---|---|---|---|---|---|---|---|---|
| | C | Si | Mn | P | S | Al | Nb | N | Ca | Mg | Cu | Ni | Cr | Mo | V | Ti | Zr | REM | |
| A | 0.065 | 0.17 | 1.45 | 0.008 | 0.0006 | 0.036 | 0.040 | 0.0036 | 0.0022 | 0.0015 | - | - | - | - | - | - | - | - | 774 |
| B | 0.036 | 0.29 | 1.48 | 0.005 | 0.0007 | 0.036 | 0.029 | 0.0045 | 0.0018 | 0.0020 | - | - | - | - | - | - | - | - | 780 |
| C | 0.055 | 0.33 | 1.15 | 0.009 | 0.0007 | 0.033 | 0.055 | 0.0036 | 0.0026 | 0.0025 | 0.22 | - | - | - | - | - | - | - | 797 |
| D | 0.043 | 0.26 | 1.55 | 0.006 | 0.0006 | 0.050 | 0.018 | 0.0039 | 0.0026 | 0.0026 | - | 0.19 | - | - | - | - | - | - | 762 |
| E | 0.042 | 0.20 | 1.33 | 0.006 | 0.0005 | 0.035 | 0.041 | 0.0038 | 0.0026 | 0.0015 | - | - | 0.20 | - | - | - | - | - | 788 |
| F | 0.032 | 0.06 | 1.65 | 0.008 | 0.0006 | 0.031 | 0.019 | 0.0072 | 0.0015 | 0.0015 | - | - | - | 0.22 | - | - | - | - | 750 |
| G | 0.063 | 0.05 | 1.03 | 0.004 | 0.0006 | 0.034 | 0.015 | 0.0032 | 0.0026 | 0.0025 | - | - | - | - | 0.032 | - | - | - | 808 |
| H | 0.056 | 0.19 | 1.43 | 0.006 | 0.0007 | 0.036 | 0.066 | 0.0025 | 0.0018 | 0.0016 | - | - | - | - | - | 0.011 | - | - | 778 |
| I | 0.067 | 0.06 | 1.18 | 0.007 | 0.0009 | 0.045 | 0.029 | 0.0041 | 0.0015 | 0.0013 | - | - | - | - | - | - | 0.0030 | - | 795 |
| J | 0.072 | 0.11 | 1.16 | 0.007 | 0.0006 | 0.033 | 0.045 | 0.0039 | 0.0026 | 0.0025 | - | - | - | - | - | - | - | 0.0072 | 795 |
| K | 0.083 | 0.05 | 1.06 | 0.012 | 0.0007 | 0.045 | 0.018 | 0.0036 | 0.0025 | 0.0023 | - | - | - | - | - | - | - | - | 799 |
| L | 0.039 | 0.16 | 1.84 | 0.006 | 0.0009 | 0.033 | 0.032 | 0.0041 | 0.0026 | 0.0019 | - | - | - | - | - | - | - | - | 751 |
| M | 0.045 | 0.12 | 1.53 | 0.013 | 0.0008 | 0.031 | 0.036 | 0.0050 | 0.0036 | 0.0033 | - | - | - | - | - | - | - | - | 774 |
| N | 0.043 | 0.16 | 1.63 | 0.007 | 0.0014 | 0.036 | 0.035 | 0.0041 | 0.0032 | 0.0024 | - | - | - | - | - | - | - | - | 766 |
| O | 0.041 | 0.32 | 1.15 | 0.006 | 0.0008 | 0.036 | 0.085 | 0.0032 | 0.0022 | 0.0020 | - | - | - | - | - | - | - | - | 805 |
| P | 0.051 | 0.19 | 1.26 | 0.007 | 0.0007 | 0.053 | 0.052 | 0.0085 | 0.0024 | 0.0026 | - | - | - | - | - | - | - | - | 793 |
| Q | 0.032 | 0.25 | 1.63 | 0.008 | 0.0006 | 0.048 | 0.022 | 0.0050 | 0.0003 | 0.0006 | - | - | - | - | - | - | - | - | 770 |
| R | 0.065 | 0.32 | 1.09 | 0.007 | 0.0008 | 0.032 | 0.030 | 0.0043 | 0.0055 | 0.0048 | - | - | - | - | - | - | - | - | 803 |
| S | 0.053 | 0.09 | 1.15 | 0.007 | 0.0008 | 0.045 | 0.016 | 0.0052 | 0.0033 | 0.0003 | - | - | - | - | - | - | - | - | 802 |
| T | 0.041 | 0.54 | 1.13 | 0.008 | 0.0009 | 0.046 | 0.029 | 0.0054 | 0.0015 | 0.0013 | - | - | - | - | - | - | - | - | 807 |

| | | | | | | | | | | | | | | | | | | | |
|---|---|---|---|---|---|---|---|---|---|---|---|---|---|---|---|---|---|---|---|
| Note 1: the balance is Fe and inevitable impurity. Note 2: underlining indicates a value outside the scope of the present disclosure. | | | | | | | | | | | | | | | | | | | |

**Table 2**

| No. | Production conditions | | | | | | | | | | | Inclusions in surface layer region | | | | HIC resistance | Clas sification |
|---|---|---|---|---|---|---|---|---|---|---|---|---|---|---|---|---|---|
| | Steel sample ID | Final plate thickness | Molten steel temp. at start of Mg and Ca addition process | Mg, Ca order of addition | Mg, Ca feed rate | Time from end of Ca addition to start of casting | Average flow rate of molten steel in mold | Slab heating temp. | Cross-rolling ratio | Cooling start | | MgO | Number density of inclusions | Average value oftop 10 % of circle equivalent diameters | Average aspect ratio of inclusions | CAR | |
| | | | | | | | | | | Temp. | Temp. - Ar₃ | | | | | | |
| | | (mm) | (°C) | | (kg/min) | (min) | (m/s) | (°C) | | (°C) | (°C) | (mass%) | (per mm²) | (µm) | | (%) | |
| 1 | A | 30 | 1590 | Mg, Ca simultaneous | 15 | 60 | 0.25 | 1060 | 10 | 780 | 6 | 25 | 43.2 | 1.9 | 1.5 | 0.1 | Example |
| 2 | B | 15 | 1590 | Mg→Ca | 15 | 70 | 0.18 | 1200 | 8 | 788 | 8 | 21 | 18.3 | 2.0 | 1.3 | 0.3 | Example |
| 3 | C | 15 | 1580 | Mg, Ca simultaneous | 15 | 50 | 0.22 | 1210 | 9 | 805 | 8 | 28 | 22.5 | 1.8 | 1.4 | 0.2 | Example |
| 4 | D | 30 | 1600 | Mg→Ca | 15 | 70 | 0.10 | 1050 | 7 | 774 | 12 | 20 | 20.1 | 2.0 | 1.3 | 0.4 | Example |
| 5 | E | 25 | 1620 | Mg, Ca simultaneous | 15 | 70 | 0.40 | 1080 | 10 | 797 | 9 | 22 | 18.2 | 2.0 | 1.4 | 0.0 | Example |
| 6 | F | 39 | 1590 | Mg→Ca | 30 | 60 | 0.35 | 1000 | 7 | 771 | 21 | 10 | 7.1 | 1.9 | 1.2 | 0.4 | Example |
| 7 | G | 12 | 1590 | Mg, Ca simultaneous | 30 | 50 | 0.27 | 1250 | 8 | 809 | 1 | 29 | 15.6 | 1.7 | 1.4 | 0.3 | Example |
| 8 | H | 15 | 1620 | Mg→Ca | 30 | 70 | 0.29 | 1190 | 10 | 785 | 7 | 35 | 14.8 | 2.0 | 1.4 | 0.1 | Example |
| 9 | I | 15 | 1580 | Mg, Ca simultaneous | 30 | 70 | 0.24 | 1210 | 9 | 799 | 4 | 12 | 8.1 | 2.0 | 1.4 | 0.2 | Example |
| 10 | J | 15 | 1600 | Mg→Ca | 30 | 50 | 0.26 | 1220 | 9 | 798 | 3 | 40 | 7.2 | 1.6 | 1.5 | 0.2 | Example |
| 11 | K | 15 | 1580 | Mg, Ca simultaneous | 15 | 65 | 0.23 | 1180 | 8 | 805 | 6 | 29 | 188 | 2.0 | 1.3 | 5.2 | Comparative Example |
| 12 | L | 39 | 1590 | Mg→Ca | 15 | 60 | 0.28 | 1000 | 7 | 770 | 19 | 25 | 23.7 | 1.9 | 1.3 | 5.1 | Comparative Example |
| 13 | M | 20 | 1610 | Mg, Ca simultaneous | 15 | 50 | 0.30 | 1090 | 10 | 786 | 12 | 33 | 15.4 | 1.9 | 1.5 | 3.1 | Comparative Example |
| 14 | N | 20 | 1610 | Mg→Ca | 15 | 50 | 0.21 | 1080 | 8 | 777 | 11 | 25 | 179 | 1.8 | 1.4 | 4.2 | Comparative Example |
| 15 | O | 12 | 1580 | Mg, Ca simultaneous | 15 | 60 | 0.19 | 1240 | 8 | 809 | 4 | 19 | 17.6 | 2.0 | 1.3 | 5.1 | Comparative Example |
| 16 | P | 15 | 1580 | Mg→Ca | 15 | 70 | 0.32 | 1170 | 10 | 798 | 5 | 18 | 14.3 | 2.0 | 1.4 | 5.3 | Comparative Example |
| 17 | Q | 20 | 1625 | Mg, Ca simultaneous | 15 | 60 | 0.35 | 1100 | 9 | 781 | 11 | 25 | 23.3 | 1.9 | 1.4 | 6.1 | Comparative Example |
| 18 | R | 15 | 1590 | Mg→Ca | 30 | 70 | 0.37 | 1180 | 7 | 808 | 5 | 11 | 9.7 | 2.0 | 1.3 | 6.5 | Comparative Example |
| 19 | S | 12 | 1570 | Mg, Ca simultaneous | 30 | 65 | 0.13 | 1030 | 10 | 807 | 5 | 10 | 7.8 | 2.0 | 1.4 | 5.5 | Comparative Example |
| 20 | T | 12 | 1600 | Mg→Ca | 30 | 50 | 0.20 | 1250 | 8 | 809 | 2 | 11 | 8.6 | 1.8 | 1.4 | 5.2 | Comparative Example |
| 21 | E | 25 | 1580 | Ca→Mg | 30 | 70 | 0.37 | 1050 | 9 | 792 | 4 | 15 | 10.3 | 5.5 | 1.2 | 6.6 | Comparative Example |
| 22 | E | 25 | 1590 | Mg→Ca | 15 | 65 | 0.15 | 1090 | 11 | 796 | 8 | 21 | 12.2 | 2.0 | 1.6 | 3.0 | Comparative Example |
| 23 | E | 25 | 1620 | Mg→Ca | 10 | 65 | 0.29 | 1100 | 10 | 793 | 5 | 9 | 9.4 | 4.5 | 1.4 | 5.3 | Comparative Example |
| 24 | E | 25 | 1610 | Mg→Ca | 30 | 80 | 0.32 | 1080 | 9 | 801 | 13 | 25 | 11.0 | 3.1 | 1.3 | 3.8 | Comparative Example |
| 25 | E | 25 | 1600 | Mg→Ca | 40 | 65 | 0.17 | 1060 | 8 | 789 | 1 | 45 | 7.5 | 4.2 | 1.3 | 5.2 | Comparative Example |
| 26 | E | 25 | 1590 | Mg→Ca | 30 | 60 | 008 | 1090 | 8 | 796 | 8 | 20 | 8.3 | 5.1 | 1.5 | 6.2 | Comparative Example |

| | | | | | | | | | | | | | | | | | |
|---|---|---|---|---|---|---|---|---|---|---|---|---|---|---|---|---|---|
| Note 1: underlining indicates a value outside the scope of the present disclosure. | | | | | | | | | | | | | | | | | |

As indicated in Table 2, No. 1 to No. 10 are Examples for which the chemical composition and production conditions satisfy appropriate ranges according to the present disclosure. In each case, inclusions having an average composition containing 10 mass% to 40 mass% MgO and an average aspect ratio of 1.5 or less were present in the surface layer region, the average value of the top 10 % of circle equivalent diameters of the inclusions was 2.0 µm or less, and the crack area ratio CAR after HIC testing in the surface layer region was 1.0 % or less.

In contrast, for No. 11 to No. 13, the chemical composition of the steel plates was outside the appropriate range according to the present disclosure, which contributed to central segregation, and the CAR did not reach the desired value.

For No. 14, the S content of the steel plate was higher than the appropriate range according to the present disclosure, resulting in excessive MnS formation, and the CAR did not reach the desired value.

For No. 15, the Nb content of the steel plate was higher than the appropriate range according to the present disclosure, resulting in coarse carbides crystallizing, and the CAR did not reach the desired value.

For No. 16, the N content of the steel plate was higher than the appropriate range according to the present disclosure, resulting in the formation of coarse nitrides, and the CAR did not reach the desired value.

No. 17 had a lower yield rate because the temperature of the molten steel was too high at the start of the addition process. As a result, the Ca content decreased too much and the CAR did not reach the desired value. Note that the yield rate varied, and No. 17 illustrates an example where only the Ca content decreased.

For No. 18, the Ca content of the steel plate was higher than the appropriate range according to the present disclosure, resulting in lower cleanliness of the steel, and the CAR did not reach the desired value.

No. 19 had a lower yield rate because the temperature of the molten steel was too low at the start of the addition process. As a result, the Mg content decreased too much and the CAR did not reach the desired value. Note that the yield rate varied, and No. 19 illustrates an example where only the Mg content decreased.

For No. 20, the Si content of the steel sheet was higher than the appropriate range according to the present disclosure, resulting in surface characteristics degrading, and the CAR did not reach the desired value.

For No. 21, Mg was added after the addition of Ca, resulting in the average value of the top 10 % of the circle equivalent diameters of the inclusions becoming too large, and the CAR did not reach the desired value.

For No. 22, cross-rolling was insufficient, resulting in a larger average aspect ratio of the inclusions, and the CAR did not reach the desired value.

For No. 23, the wire addition rate was too slow, resulting in MgO content in the inclusions being too low, and the CAR did not reach the desired value.

For No. 24, the time from the end of Ca addition to the start of casting was long, resulting in the average value of the top 10 % of the circle equivalent diameters of the inclusions becoming too large, and the CAR did not reach the desired value.

For No. 25, the wire addition rate was too fast, resulting in MgO content in the inclusions being too high, and the CAR did not reach the desired value.

For No. 26, the average flow rate of the molten steel in the mold was too slow, resulting in the average value of the top 10 % of the circle equivalent diameters of the inclusions becoming too large, and the CAR did not reach the desired value.

### INDUSTRIAL APPLICABILITY

The present disclosure provides a steel plate and a steel pipe or tube that have excellent HIC resistance.

## Claims

1. A steel plate that has a chemical composition containing, in mass%, C: 0.030 % to 0.080 %, Si: 0.01 % to 0.50 %, Mn: 0.80 % to 1.80 %, P: 0.010 % or less, S: 0.0010 % or less, Al: 0.030 % to 0.080 %, Nb: 0.080 % or less, N: 0.0080 % or less, Ca: 0.0005 % to 0.0050 %, and Mg: 0.0005 % to 0.0050 %, with the balance being Fe and inevitable impurity, wherein,
in a pair of regions extending from both surfaces of the steel plate to a depth of 1/4 thickness in the thickness direction, inclusions are present that have an average composition of 10 mass% to 40 mass% MgO and an average aspect ratio of 1.5 or less,
an average value of the top 10 % of the circle equivalent diameters of the inclusions is 2.0 µm or less, and
a crack area ratio CAR after an HIC test in the region is 1.0 % or less.

2. The steel plate according to claim 1, wherein the chemical composition further contains, in mass%, at least one selected from the group consisting of Cu: 0.30 % or less, Ni: 0.30 % or less, Cr: 0.50 % or less, Mo: 0.50 % or less, V: 0.100 % or less, Ti: 0.100 % or less, Zr: 0.0200 % or less, and REM: 0.0200 % or less.

3. A method of producing a steel plate, the method comprising:
an addition process of adding a Mg-containing substance and a Ca-containing substance to molten steel after refining is completed, under the following conditions:
(A) a temperature of the molten steel at the start of the addition process is in a range from 1580 °C to 1620 °C,
(B) the adding of the Ca-containing substance is started after the adding of the Mg-containing substance is started, or the adding of the Mg-containing substance and the Ca-containing substance is started simultaneously, and
(C) Mg and Ca feed rates are each 15 kg/min to 30 kg/min;
casting the molten steel to obtain a slab under the following conditions: (i) the time from the end of the adding of the Ca-containing substance to the start of casting is 70 min or less, and (ii) an average flow rate of the molten steel in the mold during casting is 0.10 m/s or more; and
hot rolling the slab to produce the steel plate according to claim 1 or 2.

4. The method of producing a steel plate according to claim 3, wherein
the hot rolling is carried out under the conditions that a heating temperature of the slab is 1000 °C to 1250 °C and a cross-rolling ratio is 10 or less, and
subsequently, controlled cooling of the steel plate is carried out under the condition that a surface temperature of the steel plate at the start of cooling is the Ar₃ temperature or more, where the Ar₃ temperature is calculated by the following Expression (1), Ar3 temperature, in °C = 910 - 310[C] - 80[Mn] - 20[Cu] - 15[Cr] - 55[Ni] - 80[Mo] ...(1)
where [X] means the content of element X in the steel, in mass%.

5. A steel pipe or tube made from the steel plate according to claim 1 or 2.
